# FASCICULE DE BREVET EUROPEEN

(11) **EP 3 349 918 B1**
(45) Date de publication et mention de la délivrance du brevet: **28.08.2019**
(21) Numéro de dépôt: 16775303.7
(22) Date de dépôt: 12.09.2016
(51) Int. Cl.: B07C 3/00

(54) **EQUIPEMENT DE TRI POSTAL AVEC DES ROBOTS NAVETTES QUI TRANSPORTENT DES BACS**
POSTSORTIEREINRICHTUNG MIT VERFAHRBAREN ROBOTERN ZUM TRANSPORT DER SENDUNGSBEHÄLTER
POSTAL SORTING EQUIPMENT WITH TRAVELLING ROBOTS CARRYING CONTAINERS

(30) Priorité: 15.09.2015 FR 1558620
(43) Date de publication de la demande: 25.07.2018
(73) Titulaire: Solystic, 92220 Bagneux (FR)
(72) Inventeur: CHIROL, Luc, 75016 Paris (FR); MADAR, François, 26500 Bourg Les Valence (FR)
(74) Mandataire: Prugneau, Philippe
(86) Numéro de dépôt international: PCT/FR2016/052291
(87) Numéro de publication internationale: WO 2017/046498

(56) Documents cités:
- WO-A1-01/08817

## Description

### Domaine technique

La présente invention concerne un équipement de traitement d'objets postaux comprenant une machine de tri avec une entrée d'alimentation et des sorties de tri et des bacs de stockage pour transporter les objets triés entre les sorties de tri et l'entrée d'alimentation de la machine ou encore des sorties de tri jusqu'à un point d'évacuation des objets triés.

Un tel équipement, comme décrit dans le document WO 01/08817 A1, peut être utilisé avantageusement dans un centre de tri pour la préparation de la tournée du facteur.

Ces bacs sont habituellement manutentionnés par des Opérateurs qui se déplacent le long des sorties de tri avec un chariot de transport des bacs.

Le chariot sert à amener des bacs vides vers les sorties de tri et à enlever les bacs pleins de ces sorties de tri pour les transporter vers l'entrée d'alimentation ou encore vers le point d'évacuation.

Il existe aussi des solutions de convoyage automatique des bacs entre les sorties et l'entrée d'alimentation de la machine de tri. Par exemple on connaît déjà des systèmes de convoyage de bacs qui déchargent automatiquement les bacs pleins des sorties de tri et qui chargent aussi ces sorties de tri avec des bacs vides.

Le but de l'invention est de proposer une autre solution pour transporter les bacs pleins et les bacs vides entre les sorties de tri et l'entrée d'alimentation de la machine ou encore vers un point d'évacuation des objets triés.

A cet effet, l'invention a pour objet un équipement de traitement d'objets postaux comprenant une machine de tri avec une entrée d'alimentation et des sorties de tri et des bacs de stockage pour transporter les objets triés entre les sorties de tri et l'entrée d'alimentation de la machine, caractérisé en ce qu'il comprend en outre des robots navettes aptes à déplacer les bacs sous la commande d'une unité de contrôle/commande, cette unité étant agencée pour commander le déplacement des robots navettes avec des bacs pleins d'objets entre les sorties de tri et l'entrée d'alimentation et avec des bacs vides le long des sorties de tri selon un mode en poursuite de cible où plusieurs robots navettes suivent en convoi un Opérateur qui se déplace le long des sorties de tri de la machine, par exemple en repérant une balise portée par celui-ci.

L'idée à la base de l'invention est que des robots navettes prennent en charge des bacs vides à proximité de l'entrée d'alimentation de la machine de tri postal. Puis ces robots navettes se déplacent en convois (un ou plusieurs convois) le long des sorties de tri de la machine. Chaque convoi de robots navettes suit un Opérateur qui se déplace le long des sorties de tri pour décharger celles-ci des bacs pleins au fur et à mesure du processus de tri. L'Opérateur transfère un bac plein d'une sortie de tri vers un robot navette, par exemple le robot navette en tête de convoi. Ce robot navette quitte alors le convoi et transporte le bac plein sous la commande de l'unité de contrôle/commande vers l'entrée d'alimentation de la machine ou encore le cas échéant vers un autre point d'évacuation des objets triés.

Le bac plein arrivant à l'entrée d'alimentation de la machine de tri est déchargé du robot navette et le robot navette peut alors être chargé avec un bac vide généré par l'entrée d'alimentation par exemple.

L'équipement selon l'invention peut présenter les particularités suivantes.

L'unité de contrôle/commande est agencée de telle façon à agréger automatiquement à un convoi de robots navettes un robot navette avec un bac vide quand un robot navette de ce convoi chargé avec un bac plein est déplacé d'une sortie de tri vers l'entrée d'alimentation de la machine.

L'unité de contrôle/commande est agencée pour commander le déplacement de plusieurs convois de robots navettes avec des bacs vides le long des sorties de tri de la machine.

L'unité de contrôle/commande est agencée pour équilibrer automatiquement en robots navettes les différents convois le long des sorties de tri par un délestage en cascade des convois adjacents.

La machine de tri peut comporter à chaque sortie de tri un organe d'appel de l'unité de contrôle/commande pour appeler un robot navette d'un convoi avec des bacs vides en regard de cette sortie de tri.

Il peut être prévu une passerelle qui s'intercale entre une sortie de tri de la machine et un robot navette destiné à être chargé avec un bac plein d'objets, cette passerelle étant conçue de telle façon que l'Opérateur machine déplace ce bac plein par glissement vers ledit robot navette.

Avantageusement, l'unité de contrôle/commande commande le déplacement des robots navettes avec des bacs vides sur une première voie de circulation adjacente aux sorties de tri de la machine et les robots navettes avec des bacs pleins sur une seconde voie de circulation adjacente à la première voie de circulation.

### Présentation sommaire des dessins

L'invention est exposée ci-après plus en détail et illustrée par les dessins.
La figure 1 est une représentation schématique d'un équipement de traitement d'objets postaux avec une machine de tri et des robots navettes.
La figure 2 illustre très schématiquement un état de l'équipement lors d'un transport de bacs par des robots navettes.
La figure 3 illustre un autre état de l'équipement lors de l'agrégation automatique d'un robot navette à un convoi de robots navettes.
La figure 4 illustre schématiquement le transfert d'un bac plein d'une sortie de tri vers un robot navette chargé avec un bac vide.

### Description des modes de réalisation

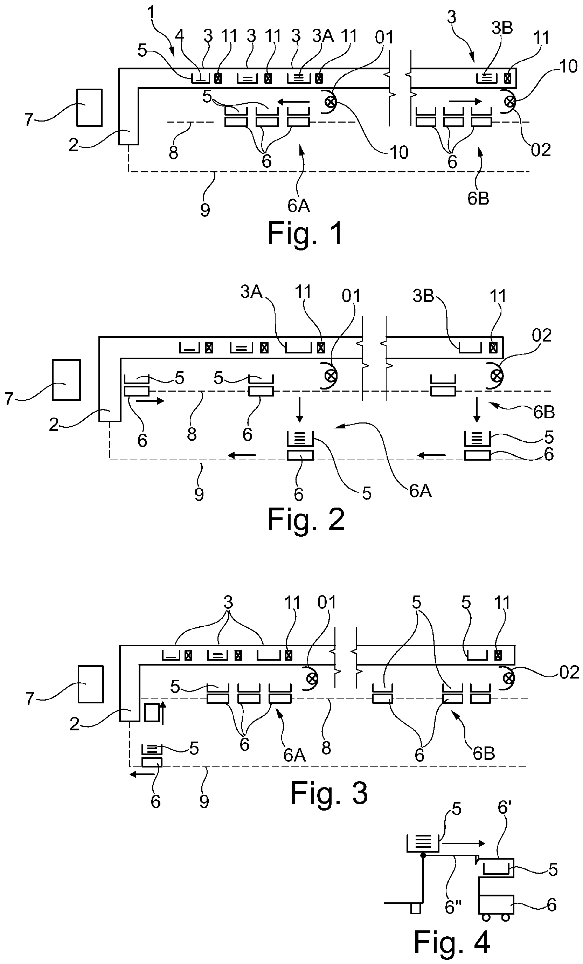

Sur la figure 1 des dessins, on a illustré un équipement de traitement d'objets postaux, tels que des lettres ou colis, qui comprend une machine de tri postal 1 avec une entrée d'alimentation 2 et des sorties de tri 3. Un tel équipement peut servir à réaliser la préparation de la tournée du facteur dans un centre de tri postal.

Les objets triés tels que 4 dans les sorties de tri 3 sont ici transportés dans des bacs de stockage 5 vers l'entrée d'alimentation 2 notamment pour être rechargés dans la machine de tri pour une nouvelle passe de tri ou encore vers un point d'évacuation des objets triés. Dans le cas d'exemple, les objets postaux 4 sont triés directement dans les bacs de stockage 5 des sorties de tri mais l'invention peut s'appliquer à des sorties de tri à tasseurs qui sont vidées dans les bacs de stockage 5.

Sur la figure 1, on a illustré seulement quelques sorties de tri 3 avec des bacs de stockage 5 remplis d'objets postaux 4 mais une machine de tri selon l'invention peut comporter un très grand nombre de sorties de tri 3.

On a aussi illustré sur la figure 1 deux Opérateurs machine O1 et O2 qui sont postés chacun à côté d'une sortie de tri. L'invention peut s'étendre à un plus grand nombre d'Opérateurs.

Selon l'invention, l'équipement comprend des robots navettes 6 pour transporter les bacs 5 entre les sorties de tri 3 et l'entrée d'alimentation 2 ou encore vers un point d'évacuation des objets triés. Les robots navettes sont des unités motorisées mobiles télécommandées à distance. Dans le cas d'exemple, les bacs sont posés sur des chariots mobiles attelés respectivement aux robots navettes pour être déplacés au sol.

En particulier, selon l'invention, ces robots navettes transportent des bacs de stockage 5 remplis d'objets postaux depuis les sorties de tri 3 vers l'entrée d'alimentation 2 ou encore vers un point d'évacuation des objets triés et des bacs 5 vides depuis l'entrée d'alimentation 2 vers les sorties de tri 3. Les bacs vides sont ici chargés sur des chariots à proximité de l'entrée d'alimentation 2.

Le déplacement des robots navettes 6 est commandé par une unité de contrôle/commande 7.

Selon l'invention, cette unité 7 est agencée pour commander le déplacement des robots navettes chargés avec des bacs pleins entre les sorties de tri et l'entrée d'alimentation pour recycler les objets dans une nouvelle passe de tri machine.

L'unité 7 est agencée pour commander le déplacement des robots navettes 6 en leur assignant une position spatiale de destination. L'unité 7 est agencée aussi pour commander le déplacement des robots navettes chargés avec des bacs vides le long des sorties de tri selon un mode de déplacement particulier dit en poursuite de cible où plusieurs robots navettes suivent en convoi un Opérateur qui se déplace le long des sorties de tri. Dans ce mode en poursuite de cible, chaque convoi de robots navettes (et donc le robot navette en tête de convoi) suit par exemple une balise 10 qui est portée par un Opérateur qui se déplace le long des sorties de tri de la machine.

Comme on le voit sur la figure 1, l'Opérateur O1 porte une balise 10. Le convoi 6A de robots navettes 6 suit en déplacement la balise 10 de l'Opérateur O1 qui peut se déplacer vers la gauche comme illustré par une flèche sur la figure 1 ou encore vers la droite. Le convoi 6B de robots navettes 6 suit en déplacement la balise 10 de l'Opérateur O2 qui peut se déplacer vers la droite comme illustré par une flèche sur la figure 1 ou vers la gauche.

Sur la figure 1, on a encore illustré en traits interrompus une première voie de circulation 8 des robots navettes qui longe les sorties de tri 3 et sur laquelle les robots navettes 6 qui transportent des bacs vides se déplacent en convois et une seconde voie de circulation 9 des robots navettes qui longe la voie 8 et sur laquelle les robots navettes 6 qui transportent les bacs pleins rejoignent l'entrée d'alimentation 2 ou encore vers un point d'évacuation des objets triés.

Comme visible sur la figure 1, la voie 9 est ici plus à l'extérieur de la machine de tri que la voie 8.

En fonctionnement de l'équipement, lorsqu'un bac est plein dans une sortie de tri comme les sorties 3A ou 3B sur la figure 1, l'Opérateur placé sur un côté de cette sortie de tri appelle un robot navette 6, faisant partie du convoi de robots navettes 6A ou 6B qui le suit en déplacement, à se positionner en regard de cette sortie de tri.

Cet appel peut être déclenché par appui d'un bouton de commande 11 disposé à proximité de la sortie de tri en question ce qui actionne l'unité 7.

Dans l'illustration de la figure 1, le convoi 6A de robots navettes est formé à proximité de la sortie de tri 3A où se tient l'Opérateur O1. Chaque robot navette 6 de ce convoi 6A porte un bac de stockage vide 5. Ici le robot navette 6 en tête de convoi se trouve face à la sortie de tri à décharger où est positionné l'Opérateur O1.

L'Opérateur O1 réalise alors un échange de bacs dans la sortie de tri 3A comme illustré sur la figure 2. le bac plein 5 de la sortie 3A est chargé ici sur le robot navette en tête du convoi 6A et le bac vide chargé sur ce robot navette est placé dans la sortie de tri 3A. La même opération de transfert peut se réaliser en même temps pour l'Opérateur O2 avec le convoi 6B. Pour faciliter cette opération de transfert de bac d'une sortie de tri vers un robot navette (avec son chariot), on peut utiliser une sorte de passerelle qui s'intercale entre la sortie de tri et le chariot du robot navette et qui est conçue pour que l'Opérateur déplace le bac plein par un simple glissement horizontal du bac de la sortie de tri vers le chariot navette. Le chariot est avantageusement à double étage pour placer le bac plein et le bac vide en superposition comme illustré sur la figure 4 qui montre de profil la sortie 3A avec un robot navette 6, un chariot 6' à double étage chargé en bas d'un bac vide 5 et attendant d'être chargé en haut du bac plein 5 par glissement horizontal (suivant la flèche) sur la passerelle 6". Puis l'Opérateur O1 actionne l'unité 7 (par exemple à l'aide du bouton de commande 11 de la sortie de tri 3A) pour qu'elle commande le déplacement du robot navette chargé du bac plein en direction de l'entrée d'alimentation 2 de la machine ou encore vers un point d'évacuation des objets triés, ce qui est illustré par les flèches sur la figure 2. Dans cette opération ce robot navette traverse la voie 8 pour rejoindre la voie 9.

En même temps l'unité 7 commande le déplacement d'un autre robot navette 6 chargé d'un bac vide pour l'agréger automatiquement au convoi 6A de robots navettes de façon à répartir les robots navettes entre les Opérateurs O1 et O2.

A l'entrée d'alimentation 2 de la machine de tri, le bac plein sur le robot navette 6 est déchargé et remplacé par un bac vide. Sous la commande de l'unité 7, le robot navette revient ensuite en convoi sur la voie de circulation 8 à l'arrière du convoi 6A de robots navettes.

L'unité 7 est apte à équilibrer automatiquement en robots navettes les différents convois 6A et 6B le long de la voie 8 par un délestage en cascade des convois adjacents.

Sur la figure 3, on a, à titre d'exemple, illustré le robot navette en tête du convoi 6A qui vient s'agréger à la queue du convoi 6B de telle sorte que les deux convois 6A et 6B aient un même nombre de robots navettes.

L'unité 7 est conçue pour réaliser ce processus d'équilibrage avec délestage au fur et à mesure que les bacs pleins dans les sorties de tri sont transférés par les robots navettes vers l'entrée d'alimentation 2 de la machine ou vers un autre point de déchargement.

Il est entendu que ce processus d'équilibrage avec délestage est indépendant des déplacements des Opérateurs O1 et O2 le long des sorties de tri.

Le nombre de robots navettes par convoi peut être un paramètre réglable de l'équipement qui dépend entre autres du nombre de sorties de tri de la machine et du nombre d'Opérateurs affectés au vidage des sorties de tri.

La balise 10 est avantageusement une balise de localisation spatiale de l'Opérateur machine ce qui permet à l'unité 7 de gérer en temps réel la circulation des convois de robots navettes en poursuite de cible sur les Opérateurs machine.

Avec l'invention, il est possible aussi de mettre en séquence les bacs pleins amenés par les robots navettes depuis les sorties de tri de façon à faire réaliser par l'unité 7 un processus de tri des objets postaux pour une préparation de la tournée du facteur, l'unité 7 pilotant le retour des bacs pleins en séquence depuis les sorties de tri de la machine vers l'entrée d'alimentation de la machine.

## Revendications

1. Equipement de traitement d'objets postaux comprenant une machine de tri (1) avec une entrée d'alimentation (2) et des sorties de tri (3) et des bacs de stockage (5) pour transporter les objets triés entre les sorties de tri et l'entrée d'alimentation de la machine, **caractérisé en ce qu'**il comprend en outre des robots navettes (6) aptes à déplacer les bacs sous la commande d'une unité de contrôle/commande (7), cette unité étant agencée pour commander le déplacement des robots navettes avec des bacs pleins d'objets entre les sorties de tri et l'entrée d'alimentation et avec des bacs vides le long des sorties de tri selon un mode en poursuite de cible où plusieurs robots navettes suivent en convoi (6A,6B) un Opérateur (O1,O2) qui se déplace le long des sorties de tri de la machine.

2. Equipement selon la revendication 1, **caractérisé en ce que** l'unité de contrôle/commande (7) est agencée de telle façon à agréger automatiquement à un convoi de robots navettes un robot navette avec un bac vide quand un robot navette de ce convoi chargé avec un bac plein est déplacé d'une sortie de tri vers l'entrée d'alimentation de la machine.

3. Equipement selon la revendication 1 ou 2, **caractérisé en ce que** l'unité de contrôle/commande (7) est agencée pour commander le déplacement de plusieurs convois de robots navettes avec des bacs vides le long des sorties de tri de la machine.

4. Equipement selon la revendication 3, **caractérisé en ce que** l'unité de contrôle/commande (7) est agencée pour répartir automatiquement les robots navettes entre les différents convois le long des sorties de tri par un délestage en cascade des convois adjacents.

5. Equipement selon l'une des revendications précédentes, **caractérisé en ce que** la machine de tri (1) comporte à chaque sortie de tri un organe d'appel (11) de l'unité de contrôle/commande pour appeler un robot navette d'un convoi de robots navettes avec des bacs vides en regard de cette sortie de tri.

6. Equipement selon l'une des revendications précédentes, **caractérisé en ce qu'**il est prévu une passerelle (6") qui s'intercale entre une sortie de tri de la machine et un robot navette destiné à être chargé avec un bac plein d'objets, cette passerelle étant conçue de telle façon que l'Opérateur machine déplace ce bac plein par glissement vers ledit robot navette.

7. Equipement selon l'une des revendications précédentes, **caractérisé en ce que** l'unité de contrôle/commande (7) commande le déplacement des robots navettes avec des bacs vides sur une première voie de circulation (8) adjacente aux sorties de tri de la machine et les robots navettes avec des bacs pleins sur une seconde voie de circulation (9) adjacente à la première voie de circulation.

8. Equipement selon l'une des revendications précédentes, **caractérisé en ce que** l'unité de contrôle/commande (7) est agencée pour commander le déplacement des robots navettes avec des bacs pleins entre les sorties de tri et un point d'évacuation des objets.

9. Procédé de tri d'objets postaux pour la préparation de la tournée du facteur, **caractérisé en ce qu'**il est réalisé avec un équipement selon l'une des revendications précédentes qui retourne en séquence des bacs pleins depuis les sorties de tri de la machine vers l'entrée d'alimentation de la machine.

## Patentansprüche

1. Verarbeitungseinrichtung für postalische Gegenstände, umfassend eine Sortiermaschine (1) mit einem Versorgungseingang (2) und Sortierausgängen (3) und Lagerbehältnissen (5) zum Transportieren der sortierten Gegenstände zwischen den Sortierausgängen und dem Versorgungseingang der Maschine,
**dadurch gekennzeichnet,**
**dass** sie ferner verfahrbare Roboter (6) umfasst, die in der Lage sind, die Behältnisse unter der Steuerung einer Regel-/Steuereinheit (7) zu verlagern, wobei diese Einheit ausgebildet ist zum Steuern der Verlagerung der verlagerbaren Roboter mit Behältnissen voller Gegenstände zwischen den Sortierausgängen und dem Versorgungseingang und mit leeren Behältnissen entlang der Sortierausgänge gemäß einem Zielverfolgungs-Modus, bei dem mehrere verfahrbare Roboter in einem Konvoi (6A, 6B) einer Bedienperson (O1, O2) folgen, die sich entlang der Sortierausgänge der Maschine bewegt.

2. Einrichtung nach Anspruch 1, **dadurch gekennzeichnet, dass** die Regel-/Steuereinheit (7) ausgebildet ist, um automatisch einem Konvoi von verfahrbaren Robotern einen verfahrbaren Roboter mit einem leeren Behältnis hinzuzufügen, wenn ein mit einem vollen Behältnis beladener verfahrbarer Roboter dieses Konvois von einem Sortierausgang zu dem Versorgungseingang der Maschine verlagert wird.

3. Einrichtung nach Anspruch 1 oder 2, **dadurch gekennzeichnet, dass** die Regel-/Steuereinheit (7) ausgebildet ist zum Steuern der Verlagerung mehrerer Konvois von verfahrbaren Robotern mit leeren Behältnissen entlang der Sortierausgänge der Maschine.

4. Einrichtung nach Anspruch 3, **dadurch gekennzeichnet, dass** die Regel-/Steuereinheit (7) ausgebildet ist zum automatischen Verteilen der verfahrbaren Roboter unter den verschiedenen Konvois entlang der Sortierausgänge durch ein kaskadierendes Entlasten der benachbarten Konvois.

5. Einrichtung nach einem der vorhergehenden Ansprüche, **dadurch gekennzeichnet, dass** die Sortiermaschine (1) an jedem Sortierausgang ein Ruforgan (11) der Regel-/Steuereinheit aufweist, um einen verfahrbaren Roboter eines Konvois von verfahrbaren Robotern mit leeren Behältnissen gegenüber dieses Sortierausgangs zu rufen.

6. Einrichtung nach einem der vorhergehenden Ansprüche, **dadurch gekennzeichnet, dass** ein Steg (6") vorgesehen ist, der zwischen einem Sortierausgang der Maschine und einem verfahrbaren Roboter, der dazu bestimmt ist, mit einem Behältnis voller Gegenstände beladen zu werden, eingelegt wird, wobei dieser Steg derart ausgebildet ist, dass die Maschinenbedienperson das volle Behältnis durch Gleiten zu dem verfahrbaren Roboter verlagert.

7. Einrichtung nach einem der vorhergehenden Ansprüche, **dadurch gekennzeichnet, dass** die Regel-/Steuereinheit (7) die Verlagerung der verfahrbaren Roboter mit leeren Behältnissen auf einer ersten Fahrstrecke (8) benachbart zu den Sortierausgängen der Maschine und die verfahrbaren Roboter mit den vollen Behältnissen auf einer zweiten, zu der ersten benachbarten Fahrstrecke (9) steuert.

8. Einrichtung nach einem der vorhergehenden Ansprüche, **dadurch gekennzeichnet, dass** die Regel-/Steuereinheit (7) ausgebildet ist zum Steuern der Verlagerung der verfahrbaren Roboter mit vollen Behältnissen zwischen den Sortierausgängen und einem Abführpunkt der Gegenstände.

9. Verfahren zum Sortieren postalischer Gegenstände für die Vorbereitung der Gangrunde eines Briefträgers,
**dadurch gekennzeichnet,**
**dass** es mit einer Einrichtung nach einem der vorhergehenden Ansprüche verwirklicht wird, die sequentiell volle Behältnisse von Sortierausgängen der Maschine zu dem Versorgungseingang der Maschine zurückleitet.

## Claims

1. Equipment for handling postal articles comprising a sorting machine (1) with a feed inlet (2) and sorting outlets (3), and storage trays (5) for transporting the sorted articles from the sorting outlets and the feed inlet of the machine, said equipment being **characterized in that** it further comprises shuttle robot carts (6) suitable for moving the trays under the control of a monitoring and control unit (7), said unit being arranged to cause the shuttle robot carts with full trays of articles to move from the sorting outlets to the feed inlet and to cause the shuttle robot carts with empty trays to move past the sorting outlets in a target-seeking mode where a plurality of shuttle robot carts follow an operator (O1, O2) in a convoy (6A, 6B) as the operator is walking past the sorting outlets of the machine.

2. Equipment according to claim 1, **characterized in that** the monitoring and control unit (7) is arranged in such a manner that it causes a shuttle robot cart with an empty tray to join a convoy of shuttle robot carts automatically when a shuttle robot cart of the convoy that is loaded with a full tray is moved from a sorting outlet to the feed inlet of the machine.

3. Equipment according to claim 1 or claim 2, **characterized in that** the monitoring and control unit (7) is arranged to cause a plurality of convoys of shuttle robot carts with empty trays to move past the sorting outlets of the machine.

4. Equipment according to claim 3, **characterized in that** the monitoring and control unit (7) is arranged to distribute the shuttle robot carts automatically between the various convoys going past the sorting outlets by the shuttle robot carts being shed in cascade from the adjacent convoys.

5. Equipment according to any preceding claim, **characterized in that**, at each sorting outlet, the sorting machine (1) has a call member (11) for calling the monitoring and control unit for the purpose of calling for a shuttle robot cart from a convoy of shuttle robot carts with empty trays facing said sorting outlet.

6. Equipment according to any preceding claim, **characterized in that** a bridge (6") is provided that is interposed between a sorting outlet of the machine and a shuttle robot cart designed to be loaded with a full tray of articles, said bridge being designed in such a manner that the machine operator moves said full tray by sliding it towards said shuttle robot cart.

7. Equipment according to any preceding claim, **characterized in that** the monitoring and control unit (7) causes the shuttle robot carts with empty trays to move along a first travel path (8) adjacent to the sorting outlets of the machine and causes the shuttle robot carts with full trays to move along a second travel path (9) adjacent to the first travel path.

8. Equipment according to any preceding claim, **characterized in that** the monitoring and control unit (7) is arranged to cause the shuttle robot carts with full trays to move from the sorting outlets to a removal point at which the articles are removed.

9. A method of sorting postal articles for preparing a delivery round, said method being **characterized in that** it is performed with equipment according to any preceding claim that returns the full trays in sequence from the sorting outlets of the machine to the feed inlet of the machine.
